(19) **Europäisches Patentamt / European Patent Office / Office européen des brevets**

(11) **EP 3 725 080 B1**

(12) **FASCICULE DE BREVET EUROPEEN**

(45) Date de publication et mention de la délivrance du brevet:
**21.02.2024 Bulletin 2024/08**

(21) Numéro de dépôt: **18849481.9**

(22) Date de dépôt: **26.11.2018**

(51) Classification Internationale des Brevets (IPC):
**H04N 19/597** *(2014.01)*    **H04N 19/573** *(2014.01)*
**H04N 19/109** *(2014.01)*    **H04N 19/176** *(2014.01)*
**H04N 19/167** *(2014.01)*

(52) Classification Coopérative des Brevets (CPC):
**H04N 19/597; H04N 19/109; H04N 19/167; H04N 19/176; H04N 19/573**

(86) Numéro de dépôt international:
**PCT/FR2018/052978**

(87) Numéro de publication internationale:
**WO 2019/115899 (20.06.2019 Gazette 2019/25)**

(54) **PROCÉDÉS ET DISPOSITIFS DE CODAGE ET DE DÉCODAGE D'UNE SÉQUENCE VIDÉO MULTI-VUES REPRÉSENTATIVE D'UNE VIDÉO OMNIDIRECTIONNELLE**

VERFAHREN UND VORRICHTUNGEN ZUR CODIERUNG UND DECODIERUNG EINER FÜR EIN OMNIDIREKTIONALES VIDEO REPRÄSENTATIVEN MEHRFACHANSICHTSVIDEOSEQUENZ

METHODS AND DEVICES FOR ENCODING AND DECODING A MULTI-VIEW VIDEO SEQUENCE REPRESENTATIVE OF AN OMNIDIRECTIONAL VIDEO

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2017 FR 1762251**

(43) Date de publication de la demande:
**21.10.2020 Bulletin 2020/43**

(73) Titulaire: **Orange**
**92130 Issy-les-Moulineaux (FR)**

(72) Inventeurs:
• **JUNG, Joël**
**92326 CHÂTILLON CEDEX (FR)**
• **RAY, Bappaditya**
**92326 CHÂTILLON CEDEX (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A2- 1 793 609        WO-A1-2017/090988**
**US-A1- 2011 243 224**

• **YEA S ET AL: "View synthesis prediction for multiview video coding", SIGNAL PROCESSING. IMAGE COMMUNICATION, ELSEVIER SCIENCE PUBLISHERS, AMSTERDAM, NL, vol. 24, no. 1-2, 1 janvier 2009 (2009-01-01), pages 89-100, XP025884347, ISSN: 0923-5965, DOI: 10.1016/J.IMAGE.2008.10.007 [extrait le 2008-10-29]**

**EP 3 725 080 B1**

**Description**

1. Domaine de l'invention

L'invention concerne les vidéos omnidirectionnelles, telles que notamment les vidéos 360°, 180°, etc .... Plus particulièrement, l'inventbn concerne le codage et le décodage de telles vidéos.

2. Art Antérieur

Les vidéos 360° sont capturées par des caméras installées sur une plateforme sphérique. Ces caméras sont dites divergentes car elles sont placées de sorte à capter une scène dans toutes les directions. Chaque caméra capte une partie de la scène, l'ensemble des vues captées par les caméras permettant de générer une vidéo représentant la scène selon un champ de vision à 360°.

De telles vidéos 360° permettent alors à l'utilisateur de regarder la scène comme s'il était placé au centre de la scène et de regarder tout autour de lui, à 360°, fournissant ainsi une nouvelle manière de regarder des vidéos. De telles vidéos sont en général restituées sur des casques de réalité virtuelle, aussi connus sous le nom anglais HMD pour « Head Mounted Devices ». Mais, elles peuvent également être affichées sur des écrans 2D équipés de moyens d'interactions utilisateur adaptés. Le nombre de caméras pour capturer une scène à 360° varie en fonction des plateformes utilisées.

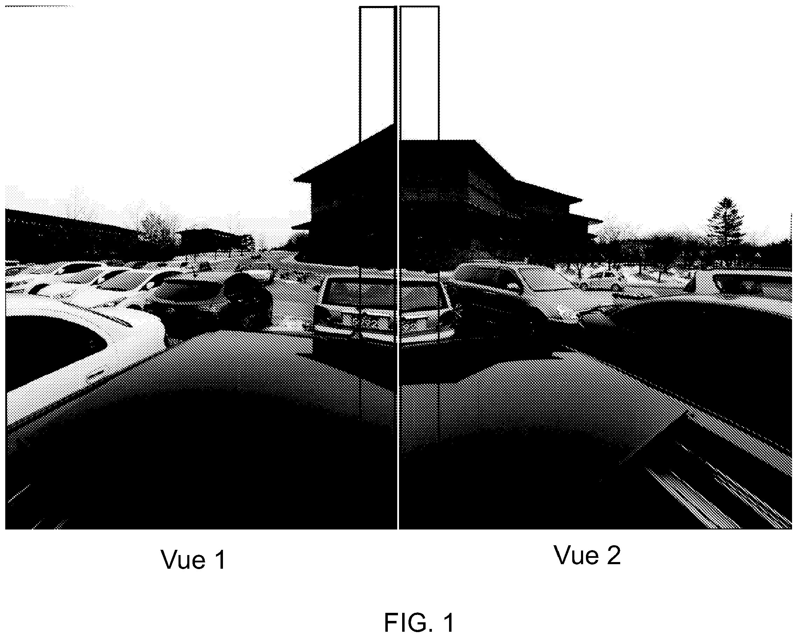

Cependant, quelle que soit la plateforme utilisée, deux caméras voisines capturent chacune une partie de la scène avec un chevauchement dans les données captées par ces deux caméras. En d'autres termes, une partie de la scène captée en 360° est commune entre deux vues captées chacune respectivement par deux caméras voisines. Ceci est illustré en FIG.1 montrant deux vues: une vue 1 captée par une première caméra et une vue 2 captée par une deuxième caméra placée à droite de la première caméra. Sur la FIG. 1, la zone à droite sur la vue 1 (encadrée en trait plein) correspond à la même partie de la scène captée que la zone à gauche sur la vue 2 (encadrée en trait plein). Il y a donc un chevauchement des données de la scène entre les vues 1 et 2. Un tel chevauchement est nécessaire pour permettre une transition continue lorsque l'utilisateur parcourt le champ visuel offert par la vidéo 360°.

Pour générer une vidéo 360°, les vues divergentes captées par les différentes caméras sont mises bout à bout en prenant en compte les chevauchements entre vues, pour créer une vue 2D panoramique. Cette étape est aussi connue sous le nom de "stitching" en anglais. Par exemple, une projection EquiRectangulaire (ERP) est une projection possible pour obtenir une telle image panoramique. Selon cette projection, les images de chaque vue sont projetées sur une surface sphérique. D'autres types de projections sont également possibles, telle qu'une projection de type Cube Mapping (projection sur les faces d'un cube). Les images projetées sur une surface sont ensuite projetées sur un plan 2D pour obtenir une image 2D comprenant à un instant donné toutes les vues de la scène captées.

Les images 2D ainsi obtenues sont ensuite codées à l'aide d'un codeur vidéo 2D classique, par exemple un codeur conforme au standard HEVC (abréviation anglaise de « High Efficiency Video Coding »).

Le principal inconvénient de cette technique est que lorsque la vidéo 360° est restituée à un utilisateur, il est possible de changer le point de vue en tournant autour d'un point central statique, mais il n'est pas possible de se déplacer à partir de ce point central, par exemple en bougeant de quelques centimètres sur la gauche, la droite, devant ou derrière. En d'autres termes, pour changer de point de vue, seules les rotations sont permises, tout autre mouvement, en particulier les translations, étant exclu. Une telle technique offre ainsi 3 degrés de liberté, (3DoF pour 3 Degree Of Freedom en anglais), mais elle n'offre pas le mouvement naturel selon 6 degrés de liberté (6DoF).

Cet inconvénient est d'autant plus gênant que même lorsque l'utilisateur n'effectue qu'un mouvement de rotation, il y a en fait beaucoup de petits mouvements de translation parasites. De tels mouvements de translation ne sont pas rendus correctement, ce qui a pour conséquence d'afficher à l'utilisateur des pixels qui ne correspondent pas parfaitement à ce qui est attendu par le cerveau de l'utilisateur. Ceci est une des principales causes de l'inconfort ressenti par les utilisateurs d'équipements de type HMD.

Les codeurs MV-HEVC et 3D-HEVC sont utilisés pour coder des contenus multi-vues. De tels codeurs exploitent les similarités inter-vues d'un contenu multi-vues. Cependant, de tels codeurs sont conçus pour gérer des vues multiples linéaires, ou convergentes, captées par des caméras ayant des centres différents, positionnées à l'extérieur de la scène. Ainsi, dans ces codeurs, la distance entre deux centres de caméra, appelée "baseline distance" en anglais, est utilisée pour calculer une disparité, avec l'aide d'une carte de profondeur. La disparité est ensuite utilisée pour la prédiction de certains blocs via une prédiction par compensation de disparité, ce qui permet d'exploiter les similarités inter-vues lors du codage des images de la séquence vidéo.

Dans le cas de vidéos 360°, les vues étant divergentes, de tels codeurs multi-vues ne sont pas optimaux pour coder les vues d'une vidéo 360°, la prédiction inter-vues sera peu, voire pas utilisée par le codeur. En effet, entre deux vues d'une vidéo 360°, il y a peu de contenu similaire pouvant être prédit entre vues.

De plus, la zone de chevauchement entre deux vues voisines n'est pas complètement similaire. En effet, les pixels de la zone de chevauchement ont subi des transformations géométriques entre vues, et une simple recopie des pixels d'une vue à l'autre dans la zone de chevauchement conduit à une prédiction inter-vues inefficace.

EP1793609 divulgue un système de codage multi-vues qui utilise une prédiction inter-vues avec synthèse de vues. Notamment, une image de référence est générée par transformation matricielle d'une image d'une vue dans une autre vue, la nouvelle image de référence étant ajoutée à la liste des images de référence.

Il existe donc un besoin d'améliorer l'état de la technique.

3. Exposé de l'invention

L'invention vient améliorer l'état de la technique. Elle concerne à cet effet un procédé de décodage d'un signal de données codées représentatif d'une séquence vidéo multi-vues représentative d'une vidéo omnidirectionnelle, la séquence vidéo multi-vues comprenant au moins une première vue et une deuxième vue. Un tel procédé de décodage est tel que défini dans le jeu de revendications.

Le procédé selon l'invention permet ainsi d'améliorer les performances en compression d'un codeur multi-vues codant des vues divergentes, en exploitant les redondances entre vues voisines pour les blocs appartenant aux zones de chevauchement inter-vues. Avantageusement, la prédiction inter-vues est améliorée par la prise en compte d'une matrice homographique permettant de compenser les distorsions géométriques entre vues.

La zone de chevauchement inter-vues est déterminée à l'aide de la matrice homographique représentant la transformation d'un plan image de la première vue vers le plan image de la deuxième vue.

Selon l'invention, pour des blocs appartenant à la zone active de l'image à décoder, la prédiction est améliorée par la possibilité de prendre en compte une nouvelle image de référence générée grâce à la matrice homographique et à une image d'une vue précédemment reconstruite. Une telle nouvelle image de référence n'est disponible que pour les blocs appartenant à la zone active. L'insertion d'une telle nouvelle image de référence dans la liste des images de référence n'impacte ainsi pas le coût de signalisation des images de référence pour les autres blocs qui n'appartiennent pas à la zone active.

La localisation des blocs appartenant à la zone active est directement déduite de la projection des pixels de l'image à décoder via la matrice homographique sur l'image précédemment reconstruite, de sorte qu'il n'est pas nécessaire de coder d'informations supplémentaires pour indiquer si ces blocs peuvent ou non utiliser la nouvelle image de référence.

Lorsque le bloc n'appartient pas à la zone active, il est par exemple classiquement reconstruit à l'aide de pixels précédemment reconstruits par prédiction intra, ou appartenant à une autre image de la même vue précédemment codée et décodée, par prédiction inter image.

Avantageusement, l'image de référence est définie dans le plan de la deuxième vue. Plus particulièrement, la zone active est déterminée dans l'image de la deuxième vue par l'ensemble des pixels qui se projettent dans l'image de la première vue à l'aide de la matrice homographique.

Ainsi, la nouvelle image de référence comprend des pixels dits actifs correspondant aux pixels de l'image de la deuxième vue projetés sur l'image de la première vue par la matrice homographique. Le reste des pixels de l'image de référence, n'ayant pas de correspondance dans l'image de la première vue sont dits pixels non-actifs.

Les différents modes ou caractéristiques de réalisation mentionnés ci-après peuvent être ajoutés indépendamment ou en combinaison les uns avec les autres, aux caractéristiques du procédé de décodage défini ci-dessus.

Selon un mode particulier de réalisation de l'invention, les paramètres sont des paramètres de caméra associés respectivement à une première caméra associée à la première vue et à une deuxième caméra associée à la deuxième vue, le procédé comprenant en outre le calcul de ladite matrice homographique à partir desdits paramètres de caméra.

Selon ce mode particulier de réalisation de l'invention, la matrice homographique est calculée lors du décodage, à partir des paramètres de caméra codés dans le signal de données représentatif de la séquence multi-vues, tels que notamment la longueur focale de chaque caméra et la séparation angulaire représentant l'angle de rotation entre la caméra de la première vue et la caméra de la deuxième vue.

Selon un autre mode particulier de réalisation de l'invention, les paramètres sont les coefficients de la matrice homographique.

Selon ce mode particulier de réalisation de l'invention, il n'est pas nécessaire de recalculer au décodage la matrice homographique. Ses coefficients sont calculés au codeur et transmis dans le signal de données représentatif de la séquence multi-vues. Il en résulte une complexité calculatoire moins élevée au décodeur.

Selon un autre mode particulier de réalisation de l'invention, lorsque la frontière de la zone active traverse le bloc à reconstruire, le procédé de décodage comprend en outre:

- la lecture, dans le signal de données, d'un autre index représentatif d'une image de référence comprise dans le groupe d'images de référence, ledit groupe d'images de référence ne comprenant pas l'image de référence générée, les pixels du bloc à reconstruire qui n'appartiennent pas à la zone active étant reconstruits à partir de pixels de l'image de référence indiquée par l'autre index lu.

Ce mode particulier de réalisation de l'invention permet d'offrir une segmentation des blocs situés en frontière de la zone active, sans nécessiter le codage d'informations pour coder cette segmentation et d'adapter la prédiction des pixels de ces blocs en fonction de la position des pixels dans le bloc par rapport à la frontière.

Selon un autre mode particulier de réalisation de l'invention, le procédé de décodage comprend en outre:

- la lecture dans le signal de données, de paramètres permettant d'obtenir une autre matrice homographique représentative de la transformation d'un plan de la deuxième vue vers un plan d'une troisième vue, au moins un pixel de l'image de la deuxième vue projeté dans une image de la troisième vue via l'autre matrice homographique étant compris dans l'image de la troisième vue,
- l'image de référence générée comprend en outre des valeurs de pixels déterminées à partir de pixels précédemment reconstruits de l'image de la troisième vue et de l'autre matrice homographique.

Ce mode particulier de réalisation de l'invention permet de prendre en compte une image d'une autre vue précédemment reconstruite pour générer la nouvelle image de référence. Ainsi, lorsqu'une autre vue est également disponible pour prédire la deuxième vue, la zone de pixels non-actifs est réduite. En effet, l'autre matrice homographique permettant de passer de la deuxième vue vers la troisième vue permet de définir une nouvelle zone active dans l'image de référence correspondant aux pixels qui lorsqu'ils sont projetés via l'autre matrice homographique sur une image de la troisième vue, sont compris dans l'image de la troisième vue.

L'invention concerne également un procédé de codage dans un signal de données, d'une séquence vidéo multi-vues représentative d'une vidéo omnidirectionnelle, la séquence vidéo multi-vues comprenant au moins une première vue et une deuxième vue. Le procédé de codage est tel que défini dans le jeu de revendications.

Selon un mode particulier de réalisation de l'invention, les paramètres sont des paramètres de caméra associés respectivement à une première caméra associée à la première vue et à une deuxième caméra associée à la deuxième vue.

Selon un autre mode particulier de réalisation de l'invention, les paramètres sont les coefficients de la matrice homographique.

Selon un autre mode particulier de réalisation de l'invention, lorsque la frontière de la zone active traverse le bloc à coder, le procédé de codage comprend en outre:

- le codage, dans le signal de données, d'un autre index représentatif d'une image de référence comprise dans le groupe d'images de référence, ledit groupe d'images de référence ne comprenant pas l'image de référence générée, les pixels du bloc à coder qui n'appartiennent pas à la zone active étant prédits à partir de pixels de l'image de référence indiquée par l'autre index.

Selon un autre mode particulier de réalisation de l'invention, le procédé de codage comprenant en outre:

- le calcul d'une autre matrice homographique représentative de la transformation d'un plan de la deuxième vue vers un plan d'une troisième vue, au moins un pixel de l'image de la deuxième vue projeté dans une image de la troisième vue via l'autre matrice homographique étant compris dans l'image de la troisième vue,
- le codage dans le signal de données, de paramètres permettant d'obtenir ladite autre matrice homographique,
- l'image de référence générée comprend en outre des valeurs de pixels déterminées à partir de pixels précédemment reconstruits de l'image de la troisième vue et de l'autre matrice homographique.

L'invention concerne également un dispositif de décodage d'un signal de données codées représentatif d'une séquence vidéo multi-vues représentative d'une vidéo omnidirectionnelle, la séquence vidéo multi-vues comprenant au moins une première vue et une deuxième vue, le dispositif de décodage étant tel que défini dans le jeu de revendications.

L'invention concerne également un dispositif de codage dans un signal de données, d'une séquence vidéo multi-vues représentative d'une vidéo omnidirectionnelle, la séquence vidéo multi-vues comprenant au moins une première vue et une deuxième vue, le dispositif de codage étant tel que défini dans le jeu de revendications.

Selon un mode particulier de réalisation de l'invention, le procédé de décodage, respectivement le procédé de codage, est mis en oeuvre par un programme d'ordinateur. L'invention concerne également un programme d'ordinateur comportant des instructions pour la mise en oeuvre du procédé de décodage ou du procédé de codage selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Un exemple vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc en anglais) ou un disque dur. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, les supports d'enregistrement peuvent correspondre à un circuit intégré dans lequel le programme est incorporé, le circuit étant adapté pour exécuter ou pour être utilisé dans l'exécution des procédés en question.

L'invention est définie par les revendications.

4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 illustre deux vues divergentes captées par deux caméras et présentant une zone de chevauchement,
- la figure 2 illustre schématiquement un exemple de captation de vues divergentes,
- la figure 3 illustre schématiquement deux exemples de vues présentant une ou deux zones de chevauchement avec des vues adjacentes placées selon le système illustré en figure 2,
- la figure 4 illustre schématiquement des étapes du procédé de codage d'une vidéo omnidirectionnelle selon un mode particulier de réalisation de l'invention,
- la figure 5 illustre un exemple d'une image de référence générée selon un mode particulier de réalisation de l'invention pour une vue centrale à coder ou à décoder, à partir d'une vue à gauche et d'une vue à droite de la vue centrale,
- la figure 6 illustre schématiquement des étapes du procédé de décodage d'une vidéo omnidirectionnelle selon un mode particulier de réalisation de l'invention,
- la figure 7 illustre un exemple d'un bloc traversé par la frontière entre une zone active et une zone non-active de l'image à coder ou à décoder,
- la figure 8 illustre schématiquement un dispositif de codage d'une vidéo omnidirectionnelle selon un mode particulier de réalisation de l'invention,
- la figure 9 illustre schématiquement un dispositif de décodage d'une vidéo omnidirectionnelle selon un mode particulier de réalisation de l'invention,
- les figures 10A-B illustrent schématiquement un signal de données codées représentatif d'une vidéo omnidirectionnelle selon un mode particulier de réalisation de l'invention,
- la figure 11 illustre la projection d'un point P de l'espace 3D sur deux plans images respectifs de deux caméras divergentes A et B.

5. Description d'un mode de réalisation de l'invention

5.1 Principe général

Un des buts de l'invention est d'améliorer le codage d'une vidéo omnidirectionnelle lorsqu'une telle vidéo est codée par un codeur multi-vues, dans lequel chaque vue est codée par prédiction temporelle par rapport à des images de la même vue précédemment codées ou par prédiction inter-vues par rapport à une image d'une autre vue.

Afin d'améliorer la prédiction inter-vues lors du codage d'une vue d'une vidéo omnidirectionnelle, une nouvelle image de référence est générée à partir d'images précédemment codées de vues voisines de la vue à coder. Plus particulièrement, une matrice homographique permettant de projeter des pixels d'une vue à coder ou à décoder vers une image d'une vue adjacente à la vue à coder ou à décoder est calculée. Les pixels de la vue à coder ou à décoder se projetant dans les frontières de l'image de la vue adjacente définissent alors une zone active de l'image à coder ou à décoder. Une telle zone active peut alors être prédite à partir des pixels de l'image de la vue adjacente lorsque ces pixels ont été précédemment reconstruits. La prédiction inter-vues est ainsi améliorée lors du codage d'une vue d'une vidéo omnidirectionnelle par la prise en compte des zones de chevauchement inter-vue.

Avantageusement, pour coder ou décoder un bloc d'une image d'une vue courante, une nouvelle image de référence est créée à partir des pixels précédemment reconstruits de la vue adjacente et de la matrice homographique. Lorsque le bloc à coder ou à décoder appartient au moins en partie à la zone active de l'image à coder ou à décoder, cette nouvelle image de référence peut alors être utilisée dans la liste des images de référence. Ainsi, le coût de signalisation de cette nouvelle image de référence n'impacte pas le codage des autres blocs n'appartenant pas à la zone active.

### 5. 2 Exemples de mise en oeuvre

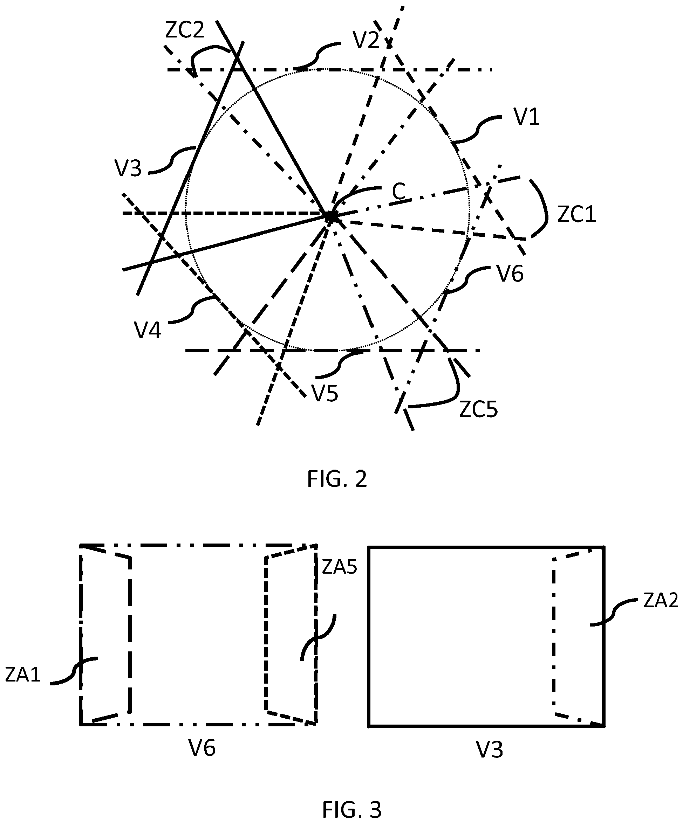

La figure 2 illustre schématiquement un exemple de captation de vues divergentes dans lequel six vues (V1-V6) sont captées respectivement depuis six caméras placées sur une plateforme représentée par le point C sur la figure 2. Sur la figure 2, le champ de vision de chaque caméra est représenté par des lignes en traits pleins ou pointillés et le plan image de la vue associée à chaque caméra est représentée à l'aide des mêmes traits pleins ou pointillés que le champ de vision de la caméra. Il apparaît que pour chaque vue, une zone de chevauchement existe entre la vue courante et la vue gauche, respectivement droite. En d'autres termes, deux vues adjacentes ou voisines présentent des pixels représentatifs des mêmes données 3D de la scène captées respectivement par chaque caméra. Par exemple, sur la figure 2, la zone ZC1 illustre le chevauchement entre les vues V1 et V6, la zone ZC2 illustre le chevauchement entre les vues V2 et V3 et la zone ZC5 illustre le chevauchement entre les vues V5 et V6.

Toutefois, afin d'utiliser des informations d'une zone de chevauchement d'une vue adjacente pour le codage d'une vue courante, il est nécessaire que la vue adjacente ait préalablement été codée et reconstruite.

Ainsi, par exemple si l'ordre de codage des vues est V1, V2, V3, V4, V5 et V6, la vue V1 est codée sans prédiction par rapport à une zone de chevauchement puisqu'aucune vue n'a encore été codée. Une image de la vue V1 sera par exemple codée par prédiction temporelle par rapport à des images de la vue V1 précédemment codées.

Le codage des vues V2, V3, V4 et V5 pourra mettre en oeuvre une prédiction temporelle par rapport à des images de la même vue précédemment codées et/ou une prédiction inter-vues à l'aide de la zone de chevauchement entre la vue courante V2 respectivement, V3, V4 et V5 et la vue droite V1, respectivement V2, V3, V4.

Le codage de la vue V6 pourra utiliser une prédiction temporelle par rapport à des images de la même vue précédemment codées et/ou une prédiction inter-vues à l'aide de la zone de chevauchement entre la vue courante V6 et la vue droite V5 et et/ou une prédiction inter-vues à l'aide de la zone de chevauchement entre la vue courante V6 et la vue gauche V1.

Par exemple, comme illustré en figure 3, pour la vue V6, la zone ZA1 représentative du chevauchement de la vue V1 avec la vue V6 et la zone de chevauchement ZA5 représentative du chevauchement de la vue V5 avec la vue V6 pourront être utilisées pour la prédiction de la vue V6.

Selon un autre exemple, pour la vue V3, la zone ZA2 représentative du chevauchement de la vue V2 avec la vue V3 pourra être utilisée pour la prédiction de la vue V3.

Les procédés de codage et de décodage d'une vidéo omnidirectionnelle décrits ci-après s'appliquent de manière générale au cas de séquences d'images multi-vues ayant N vues, N étant un entier supérieur ou égal à 2.

Les procédés de codage et de décodage d'une vidéo omnidirectionnelle sont décrits ci-après de manière générale, et peuvent être intégrés dans tout type de codeurs/décodeurs vidéo multi-vues, par exemple le standard 3D-HEVC ou MV-HEVC, ou autre.

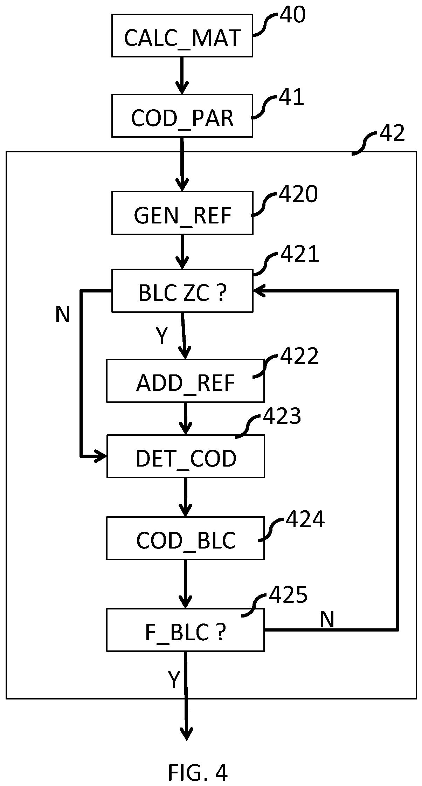

La figure 4 illustre schématiquement des étapes du procédé de codage d'une vidéo omnidirectionnelle selon un mode particulier de réalisation de l'invention.

Lors d'une étape 40, pour chaque vue $k$ à coder, une matrice homographique est calculée pour représenter la transformation d'un plan d'une vue $k$ à coder vers un plan d'une vue adjacente ($k-1$ par exemple) à la vue $k$ à coder. On considère ici que l'image de la vue adjacente à la vue à coder a préalablement été codée et reconstruite. On considère donc ici que les images de la vue $k-1$ ont été précédemment codées et reconstruites, par prédiction temporelle par rapport à des images précédemment codées et reconstruites de la même vue ou par prédiction inter-vues.

Lorsque la vue courante k à coder est adjacente de chaque côté à deux vues préalablement codées et reconstruites, deux matrices homographiques sont calculées, correspondant respectivement chacune à la transformation d'un plan de la vue à coder vers un plan de la vue droite et à la transformation d'un plan de la vue à coder vers un plan de la vue gauche. On considère par la suite le codage d'une vue $k$, une vue adjacente $k-1$ ayant été préalablement codée et reconstruite et ayant une zone de chevauchement avec la vue $k$. On considère ici qu'une vue $k$ a une zone de chevauchement avec la vue $k-1$ si au moins un pixel d'une image de la vue $k$ se projette sur une image de la vue $k-1$. Un tel pixel est alors dans une zone dite active de l'image de la vue $k$.

Lors de l'étape 40, la matrice homographique entre la vue adjacente $k-1$ et la vue courante $k$ à coder est calculée à partir des paramètres de caméra associés respectivement à la vue adjacente $k-1$ et à la vue courante $k$.

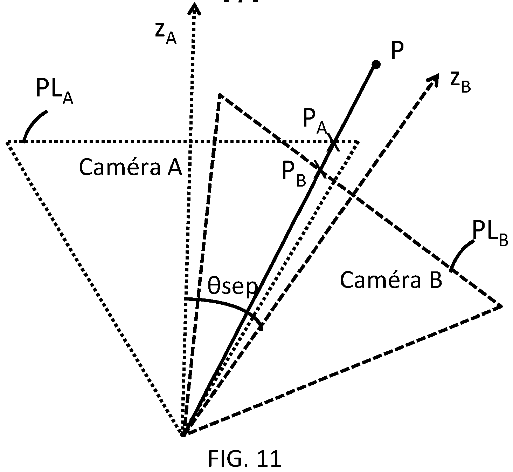

Le calcul de la matrice homographique est décrit en relation avec la figure 11 sur laquelle les champs de captation de deux caméras divergentes A et B sont représentés. L'axe principal de la caméra A est l'axe $z_A$, correspondant à l'axe perpendiculaire au plan image $PL_A$ de la caméra A. La caméra adjacente B est tournée d'un angle de $\theta_{sep}$ par rapport à l'axe $Z_A$ de la caméra A. L'axe principal de la caméra B est l'axe $z_B$, correspondant à l'axe perpendiculaire au plan image $PL_B$ de la caméra B.

Un point $P(px, py, pz)$ de l'espace 3D se projette dans le plan image $PL_A$ de la caméra A en $P_A(pax, pay)$ et dans le plan image PL$_B$ de la caméra B en $P_B(pbx,pby)$. La relation entre les points $P$, $P_A$, $P_B$ est donnée par:

$$P_A = K_A P \qquad (1)$$

$$P_B = K_B R_{A2B} P \quad (2)$$

où $K_A$ et $K_B$ représentent les paramètres intrinsèques des caméras A et B tels que:

$$K_A = \begin{bmatrix} f_A & 0 & 0 \\ 0 & f_A & 0 \\ 0 & 0 & 1 \end{bmatrix}, K_B = \begin{bmatrix} f_B & 0 & 0 \\ 0 & f_B & 0 \\ 0 & 0 & 1 \end{bmatrix}$$

, avec $f_A$ et $f_B$ la longueur focale des caméras A et B respectivement. $R_{A2B}$ représente la rotation de l'axe principal z$_A$ de la caméra A vers l'axe principal z$_B$ de la caméra B, correspondant à une rotation dans le sens horaire d'un angle $\theta sep$ autour de l'axe y. $R_{B2A}$ représente la rotation de l'axe principal z$_B$ de la caméra B vers l'axe principal z$_A$ de la caméra A, correspondant à une rotation dans le sens anti-horaire d'un angle de $\theta sep$ autour de l'axe y.

$$R_{A2B} = R_{B2A}^{-1} = \begin{bmatrix} cos(\theta sep) & 0 & -sin(\theta sep) \\ 0 & 1 & 0 \\ sin(\theta sep) & 0 & cos(\theta sep) \end{bmatrix}$$

L'équation (2) peut alors s'écrire:

$$P = (K_B R_{A2B})^{-1} P_B = R_{A2B}^{-1} K_B^{-1} P_B$$

En substituant la valeur de P donnée par l'équation (1), la relation entre $P_A$ et $P_B$ peut être déduite par:

$$P_A = K_A R_{A2B}^{-1} K_B^{-1} P_B = H P_B$$

$$H = K_A R_{A2B}^{-1} K_B^{-1} = K_A R_{B2A} K_B^{-1} \qquad (3)$$

Les points $P_A$ et $P_B$ sont donc reliés via la matrice d'homographie H.
Les paramètres de la matrice H peuvent ainsi être obtenus à partir des longueurs focales des caméras A et B et de l'écart angulaire $\theta sep$ entre les deux caméras.
Au cours de l'étape 40, les paramètres d'une matrice d'homographie $H_{k,k-1}$ représentant la transformation de la vue $k$ vers la vue $k-1$ sont calculés à partir des longueurs focales des caméras associées respectivement aux vues $k$ et $k-1$ et de l'angle de séparation $\theta sep$ entre les deux caméras.
Lors d'une étape 41, des paramètres permettant d'obtenir la matrice d'homographie $H_{k,k-1}$ sont codés dans le signal de données représentatif de la vidéo omnidirectionnelle.
Selon une variante, les 9 coefficients de la matrice homographique 3x3 $H_{k,k-1}$ sont codés dans le signal.
Selon une autre variante, les paramètres intrinsèques et extrinsèques des caméras de la vue $k-1$ et de la vue $k$ sont codés dans le signal, i.e. les longueurs focales des caméras et l'angle de séparation $\theta sep$ entre les deux caméras. Selon cette variante, la matrice d'homographie $H_{k,k-1}$ devra être recalculée au décodeur.
Suite à l'étape 41, la vue courante $k$ est codée dans le signal de données image par image. Lors d'une étape 42, une image courante $I_t^k$ d'un instant temporel t de la vue k est codée.
Pour cela, lors d'une étape 420, une nouvelle image de référence $I_{ref}$est créée. La nouvelle image de référence $I_{ref}$ est créée à partir des pixels d'une image $\widehat{I_t^{k-1}}$ au même instant temporel t de la vue adjacente $k-1$ et qui a été préalablement codée et reconstruite. Pour cela, pour chaque pixel de l'image de référence, le pixel (x,y) de l'image de référence est projeté par la matrice homographique $H_{k,k-1}$ en un point (x',y') dans le repère de la vue $k-1$.

Le pixel (x,y) est projeté dans l'image $\widetilde{I_t^{k-1}}$ de la vue k-1 si le point (x',y') appartient à l'image $\widetilde{I_t^{k-1}}$. Si le pixel projeté n'appartient pas à l'image $\widetilde{I_t^{k-1}}$, i.e. si le pixel projeté est en-dehors des frontières de l'image, la valeur du pixel dans l'image de référence est mise à une valeur par défaut, par exemple 128. Le pixel est dit non-actif.

Si le pixel projeté est dans l'image $\widetilde{I_t^{k-1}}$, i.e. si le pixel projeté est dans les frontières de l'image, la valeur du pixel dans l'image de référence est alors obtenue à partir des pixels de l'image $\widetilde{I_t^{k-1}}$. Le pixel est alors dit actif.

Si le pixel projeté correspond à un pixel de la grille de l'image $\widetilde{I_t^{k-1}}$, la valeur du pixel projeté dans l'image de référence prend alors la valeur du pixel de l'image $\widetilde{I_t^{k-1}}$ correspondant.

Sinon, si le pixel projeté est situé à une position sous-pixellique dans l'image $\widetilde{I_t^{k-1}}$, la valeur du pixel projeté dans l'image de référence est interpolée de manière classique à partir de la valeur des pixels de la grille de l'image $\widetilde{I_t^{k-1}}$ entourant la position du pixel projeté dans l'image $\widetilde{I_t^{k-1}}$.

Les pixels actifs et non-actifs définissent ainsi une zone active et une zone non-active dans l'image de référence.

Dans le cas où la vue k à coder dispose d'une autre vue adjacente k+1 précédemment codée et reconstruite, l'étape 420 est itérée en utilisant cette fois la matrice homographique calculée entre la vue k et la vue k+1 et l'image $\widetilde{I_t^{k+1}}$ de la vue k+1.

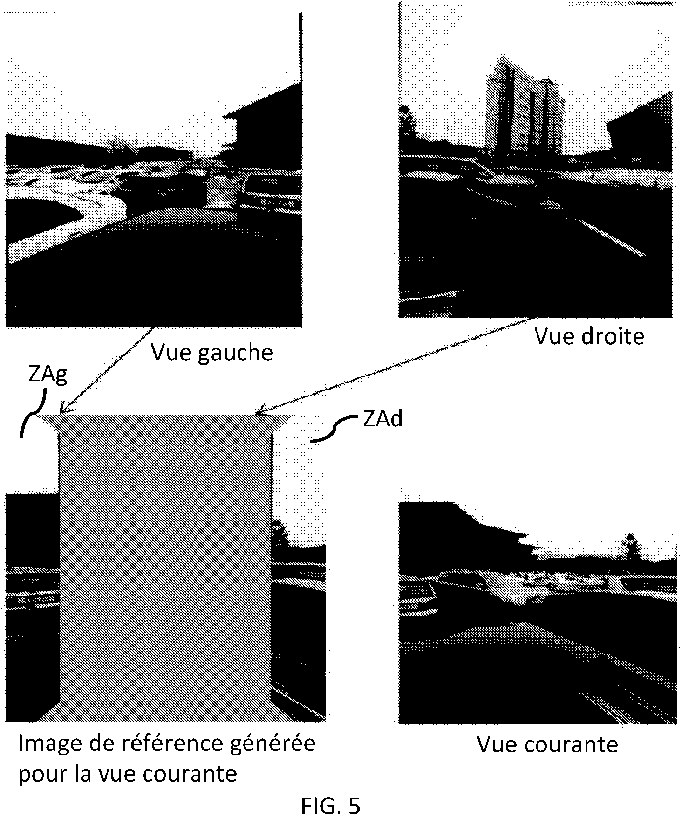

La figure 5 illustre un exemple d'une image de référence générée selon un mode particulier de réalisation de l'invention pour une vue courante, à partir d'une vue voisine à gauche et d'une vue voisine à droite de la vue courante. Dans l'exemple de la figure 5, deux matrices d'homographie ont été utilisées, une matrice pour chaque vue adjacente gauche et droite. Il apparaît que seules les zones de chevauchement entre vues adjacentes sont reconstruites dans l'image de référence via la projection par les matrices homographiques. En effet, sur la figure 5, l'image de référence présente une zone non-active (zone grise) et deux zones actives ZAg et ZAd représentatives respectivement du chevauchement de la vue courante avec la vue gauche, respectivement avec la vue droite.

En référence à nouveau à la figure 4, l'image courante $I_t^k$ de la vue k est ensuite codée. Pour cela, l'image est découpée en bloc de pixels et les blocs de pixels de l'image sont parcourus pour être codés par prédiction spatiale, temporelle ou inter-vues, comme on le verra ci-après.

Pour chaque bloc $B_k$ de l'image courante $I_t^k$, les étapes suivantes sont mises en oeuvre. Lors d'une étape 421, il est déterminé si le bloc $B_k$ est localisé dans la zone active de l'image courante. Autrement dit, il est déterminé si le bloc $B_k$ comprend des pixels actifs.

Il est à noter que l'image de référence étant représentée dans le plan image de la vue courante à coder, les zones active et non-active dans l'image de la vue courante à coder correspondent à celles de l'image de référence.

Ainsi, selon le mode particulier de réalisation de l'invention décrit ici, le bloc $B_k$ appartient à la zone active si tous les pixels du bloc $B_k$ sont actifs, i.e. si tous les pixels du bloc $B_k$ sont dans la zone active.

Si le bloc $B_k$ appartient à la zone active, lors d'une étape 422, la nouvelle image de référence $I_{ref}$ est ajoutée dans la liste des images de référence pour coder le bloc $B_k$. Sinon, i.e. si le bloc $B_k$ n'appartient pas à la zone active, la liste des images de référence pour coder le bloc $B_k$ est inchangée et ne comprend que des images précédemment reconstruites de la vue courante k à coder.

Lors d'une étape 423, un mode de codage du bloc $B_k$ est déterminé. Par exemple, une optimisation débit-distorsion est mise en oeuvre au cours de laquelle tous les modes de codage disponibles pour le bloc $B_k$ sont mis en compétition. Plus particulièrement, au cours de l'optimisation débit-distorsion, classiquement des modes de codage par prédiction spatiale ou intra-image sont testés et des modes de codage par prédiction temporelle à l'aide de la liste d'images de référence sont testés.

Selon le mode particulier de réalisation de l'invention décrit ici, avantageusement le fonctionnement classique des codeurs pour déterminer un mode de codage pour un bloc courant n'est pas modifié. En effet, lorsque le bloc $B_k$ est localisé dans la zone active, la nouvelle image de référence a été ajoutée dans la liste des images de référence.

Ainsi, l'optimisation débit-distorsion sélectionnera un mode de codage utilisant une prédiction par rapport à la nouvelle image de référence créée lors de l'étape 420 si ce mode de codage est plus avantageux pour le bloc $B_k$ qu'un mode de codage intra ou inter classique. Classiquement, lorsque les modes de codage par prédiction temporelle sont testés, le mouvement entre le bloc courant et un bloc de pixels dans une image de référence de la liste d'images de référence est estimé, par exemple par une méthode d'appariement de blocs.

Lors d'une étape 424, lorsque le meilleur mode de codage est déterminé pour le bloc $B_k$, les données du bloc sont codées dans le signal de données. Classiquement, un bloc de prédiction est construit selon le mode de codage déterminé lors de l'étape 423.

En particulier, si le mode de codage déterminé à l'étape 423 utilise une prédiction par rapport à la nouvelle image de référence, le bloc de prédiction correspond au bloc de pixels dans la nouvelle image de référence pointé par le vecteur de mouvement ou l'information de disparité du bloc courant $B_k$ déterminé, par exemple à l'étape 423.

Un bloc de résidu est obtenu en calculant la différence entre le bloc courant $B_k$ et le bloc de prédiction. Le résidu de prédiction est transformé, par exemple par une transformée de type DCT (pour « Discrète Cosine Transform » en anglais), quantifié et codé par un codeur entropique. Le mode de prédiction est également codé dans le signal de données, ainsi que les paramètres de codage associés, tels que vecteurs de mouvement ou de disparité, index de l'image de référence utilisée pour la prédiction.

Classiquement, le bloc courant $B_k$ est reconstruit pour servir de prédiction pour le codage des blocs suivants.

Lors de l'étape 425, il est vérifié si tous les blocs de l'image courante ont été codés. S'il reste des blocs à coder, le procédé passe au bloc suivant dans l'image à coder et retourne à l'étape 421. Sinon, le codage de l'image courante prend fin. L'image courante reconstruite est mémorisée pour servir d'image de référence pour le codage d'images suivantes ou de vues suivantes.

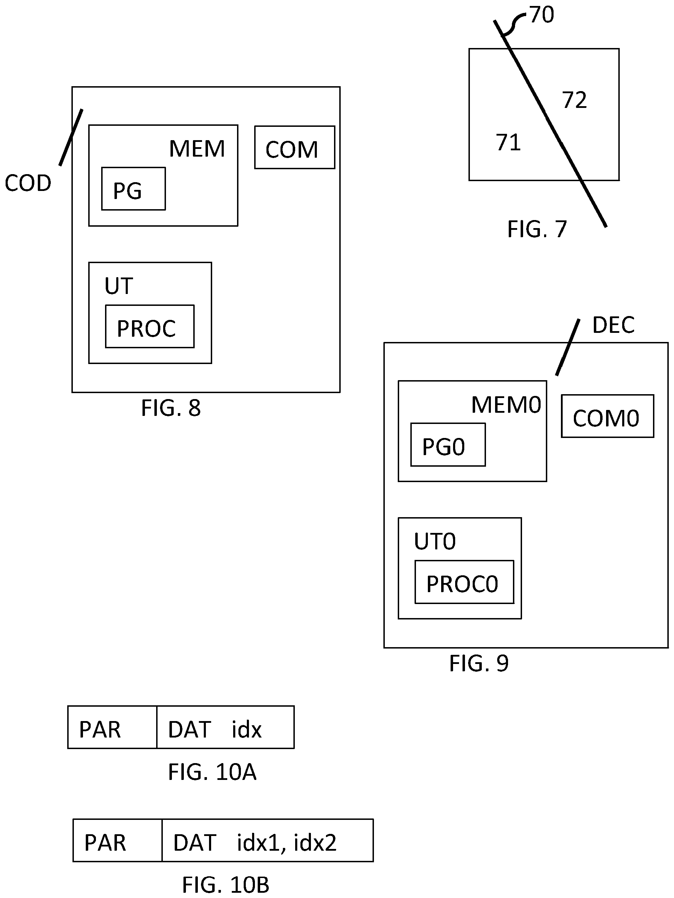

La figure 10A illustre schématiquement un exemple de signal de données codées représentatif d'une vidéo omnidirectionnelle selon le mode particulier de réalisation de l'invention décrit en relation avec la figure 4. Un tel signal de données comprend des paramètres PAR permettant d'obtenir une matrice homographique représentative de la transformation d'un plan d'une vue $k$ vers un plan d'une vue voisine $k-1$. Pour chaque image de la vue $k$, des données codées DAT comprennent, pour au moins un bloc de la zone active de l'image, un index $idx$ indiquant une image de référence parmi une liste d'images de référence, à utiliser pour reconstruire le bloc.

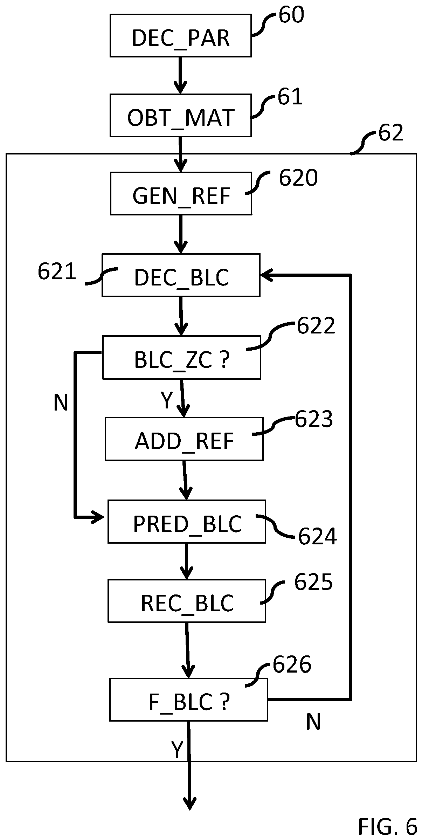

La figure 6 illustre schématiquement des étapes du procédé de décodage d'un signal de données codées représentatif d'une vidéo omnidirectionnelle selon un mode particulier de réalisation de l'invention. Par exemple, le signal de données codées a été généré selon le procédé de codage décrit en relation avec la figure 4. On considère ici le décodage d'une vue courante $k$, adjacente à une vue $k-1$. On considère également que les images de la vue $k-1$ ont été précédemment décodées et reconstruites.

Lors d'une étape 60, des paramètres permettant d'obtenir une matrice homographique $H_{k,k-1}$ représentative de la transformation d'un plan de la vue à décoder $k$ vers un plan de la vue adjacente $k-1$ sont lus dans le signal.

Selon une variante, les 9 paramètres de la matrice homographique 3x3 $H_{k,k-1}$ sont lus dans le signal. Selon une autre variante, les paramètres intrinsèques et extrinsèques des caméras de la vue $k-1$ et de la vue $k$ sont lus dans le signal, i.e. les longueurs focales des caméras et l'angle de séparation $\theta sep$ entre les deux caméras.

Lors d'une étape 61, la matrice homographique $H_{k,k-1}$ est obtenue. Lorsque les paramètres de la matrice sont lus dans le signal, l'obtention de la matrice homographique $H_{k,k-1}$ est directe à partir de ces paramètres.

Lorsque les paramètres lus correspondent aux paramètres de caméras, la matrice homographique $H_{k,k-1}$ est calculée, à l'aide de l'équation (3) donnée ci-dessus.

Suite à l'étape 61, la vue courante $k$ est décodée image par image à partir des données contenues dans le signal de données. Lors d'une étape 62, une image courante $I_t^k$ d'un instant temporel t de la vue k est décodée.

Pour cela, lors d'une étape 620, une nouvelle image de référence $I_{ref}$ est créée. La nouvelle image de référence $I_{ref}$ est créée à partir des pixels d'une image $\widetilde{I_t^{k-1}}$ au même instant temporel t de la vue adjacente $k-1$ et qui a été préalablement reconstruite. Le même mécanisme que celui décrit en relation avec l'étape 420 de la figure 4 est mis en oeuvre pour créer l'image de référence $I_{ref}$.

L'image courante $I_t^k$ de la vue $k$ est ensuite décodée. Pour cela, l'image est découpée en blocs de pixels et les blocs de pixels de l'image sont parcourus pour être décodés et reconstruits.

Pour chaque bloc $B_k$ de l'image courante $I_t^k$, les étapes suivantes sont mises en oeuvre.

Lors d'une étape 621, les données codées du bloc $B_k$ sont lues dans le signal. En particulier, lorsque le bloc $B_k$ est codé par prédiction par rapport à une image de référence comprise dans une liste d'images de référence (prédiction inter images), un index d'image de référence est lu. Classiquement, pour une image codée par prédiction inter-image, la liste d'images de référence comprend au moins une image précédemment reconstruite de la même vue que l'image courante à reconstruire. D'autres informations peuvent éventuellement être lues dans le signal pour le bloc courant $B_k$, telles qu'un mode de codage, un vecteur de mouvement ou une information de disparité, des coefficients de résidus de prédiction. Classiquement, les données lues pour le bloc sont décodées par un décodeur entropique. Un bloc de résidu est obtenu par l'application aux coefficients décodés d'une quantification inverse de celle mise en oeuvre au codage et, aux coefficients décodés dé-quantifiés, d'une transformée inverse de celle mise en oeuvre au codage.

Lors d'une étape 622, il est déterminé si le bloc $B_k$ est localisé dans la zone active de l'image courante. Autrement dit, il est déterminé si le bloc $B_k$ comprend des pixels actifs.

Selon le mode particulier de réalisation de l'invention décrit ici, le bloc $B_k$ appartient à la zone active si tous les pixels du bloc $B_k$ sont actifs, i.e. si tous les pixels du bloc $B_k$ sont dans la zone active.

Si le bloc $B_k$ appartient à la zone active, lors d'une étape 623, la nouvelle image de référence $I_{ref}$ est ajoutée dans la liste des images de référence. Sinon, i.e. si le bloc $B_k$ n'appartient pas à la zone active, la liste des images de référence pour décoder le bloc $B_k$ est inchangée et ne comprend que des images précédemment reconstruites de la vue courante k à décoder.

Lors d'une étape 624, la prédiction du bloc $B_k$ est alors calculée classiquement. Selon le mode particulier de réalisation de l'invention décrit ici, avantageusement le fonctionnement classique des décodeurs pour prédire un bloc courant n'est pas modifié.

En effet, lorsque le bloc $B_k$ est localisé dans la zone active, la nouvelle image de référence a été ajoutée dans la liste des images de référence. Ainsi, la construction du bloc de prédiction pour le bloc courant $B_k$ est réalisée par compensation en mouvement ou de disparité à partir des informations de mouvement ou de disparité déterminée pour le bloc courant et de l'image de référence indiquée par l'index de référence lu dans le signal.

Lors d'une étape 625, le bloc courant $B_k$ est reconstruit. Pour cela, le bloc de prédiction construit lors de l'étape 624 est ajouté au bloc de résidu obtenu lors de l'étape 621.

Lors de l'étape 626, il est vérifié si tous les blocs de l'image courante ont été décodés. S'il reste des blocs à décoder, le procédé passe au bloc suivant dans l'image à décoder et retourne à l'étape 621. Sinon, le décodage de l'image courante prend fin. L'image courante reconstruite est mémorisée pour servir d'image de référence pour le décodage d'images suivantes ou de vues suivantes.

Dans le mode particulier de réalisation de l'invention décrit ci-dessus, il est déterminé que le bloc $B_k$ à coder ou à décoder appartient à la zone active de l'image courante si tous les pixels du bloc $B_k$ sont actifs, i.e. si tous les pixels du bloc $B_k$ sont dans la zone active.

Dans un autre mode particulier de réalisation de l'invention, il est déterminé que le bloc $B_k$ appartient à la zone active si au moins un pixel du bloc à coder ou à décoder est un pixel actif.

Selon ledit mode particulier de réalisation de l'invention, les procédés de codage et de décodage sont similaires lorsque tous les pixels du bloc à coder ou à décoder sont actifs.

Il en va de même lorsque tous les pixels du bloc à coder ou à décoder sont non-actifs. Selon ledit autre mode de réalisation, pour un bloc à coder ou à décoder comprenant au moins un pixel actif et au moins un pixel non-actif, la prédiction d'un tel bloc est adaptée.

La figure 7 illustre un exemple d'un bloc à coder ou à décoder traversé par la frontière 70 entre une zone active 71 et une zone non-active 72 de l'image à coder ou à décoder.

Pour ce type de blocs, lorsque le bloc de prédiction déterminé aux étapes 424 et 624 des figures 4 et 6 est construit en utilisant la nouvelle image de référence créée aux étapes 420 et 620, le bloc de prédiction comprend alors, dans la zone active 71 du bloc, des pixels obtenus par compensation en mouvement par rapport à la nouvelle image de référence et dans la zone non-active 72 du bloc, des pixels obtenus par compensation en mouvement par rapport à une image précédemment reconstruite de la vue courante comprise dans la liste d'images de référence. Ainsi, pour les blocs traversés par la frontière entre la zone active et la zone non-active:

- un premier index de référence est codé dans le signal ou décodé du signal, le premier index de référence correspondant à l'index de l'image de référence utilisée pour coder la zone active du bloc, et
- un deuxième index de référence, correspondant à l'index de l'image de référence précédemment reconstruite de la vue courante utilisée pour coder la zone non-active du bloc, est codé dans le signal ou décodé du signal.

Un exemple d'un tel signal est illustré en figure 10B. Le signal de données de la figure 10B comprend des paramètres PAR permettant d'obtenir la matrice homographique représentative de la transformation d'un plan de la vue courante vers un plan d'une vue voisine. Pour chaque image de la vue courante, des données codées DAT comprennent, pour au moins un bloc traversé par la frontière entre la zone active et la zone non-active de l'image, deux index *idx1* et *idx2* indiquant les images de référence parmi une liste d'images de référence, à utiliser pour reconstruire le bloc.

En variante, le deuxième index *idx2* n'est codé dans le signal pour le bloc traversé par la frontière entre la zone active et la zone non-active de l'image, que si le premier index *idx1* indique que l'image de référence à utiliser pour la zone active du bloc correspond à la nouvelle image de référence créée aux étapes 420 ou 620. Selon cette variante, il n'est pas nécessaire de coder de deuxième index lorsque l'image de référence utilisée pour prédire le bloc est une image précédemment reconstruite de la vue courante.

La figure 8 présente la structure simplifiée d'un dispositif de codage COD adapté pour mettre en oeuvre le procédé de codage selon l'un quelconque des modes particuliers de réalisation de l'invention décrits précédemment.

Un tel dispositif de codage comprend une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les étapes du procédé de codage tel que décrit précédemment, lorsque le programme est exécuté par le processeur PROC.

A l'initialisation, les instructions de code du programme d'ordinateur PG sont par exemple chargées dans une mémoire de l'unité de traitement (non représentée) avant d'être exécutées par le processeur PROC. Le processeur PROC de l'unité de traitement UT met notamment en oeuvre les étapes du procédé de codage décrit en relation avec les figures 4 et 7, selon les instructions du programme d'ordinateur PG.

Selon un mode particulier de réalisation ne faisant pas partie de l'invention, le dispositif de codage comprend une interface de communication COM permettant notamment au dispositif de codage de transmettre un signal de données codées représentatif d'une vidéo omnidirectionnelle, via un réseau de communication.

Selon un mode particulier de réalisation ne faisant pas partie de l'invention, le dispositif de codage décrit précédemment est compris dans un terminal.

La figure 9 présente la structure simplifiée d'un dispositif de décodage DEC adapté pour mettre en oeuvre le procédé de décodage selon l'un quelconque des modes particuliers de réalisation de l'invention décrit précédemment.

Un tel dispositif de décodage comprend une mémoire MEM0, une unité de traitement UT0, équipée par exemple d'un processeur PROC0, et pilotée par le programme d'ordinateur PGO stocké en mémoire MEM0. Le programme d'ordinateur PGO comprend des instructions pour mettre en oeuvre les étapes du procédé de décodage tel que décrit précédemment, lorsque le programme est exécuté par le processeur PROC0.

Selon un mode particulier de réalisation ne faisant pas partie de l'invention, le dispositif de décodage DEC comprend une interface de communication COM0 permettant notamment au dispositif de décodage de recevoir un signal de données codées représentatif d'une vidéo omnidirectionnelle, via un réseau de communication.

A l'initialisation, les instructions de code du programme d'ordinateur PGO sont par exemple chargées dans une mémoire de l'unité de traitement (non représentée) avant d'être exécutées par le processeur PROC0. Le processeur PROC0 de l'unité de traitement UT0 met notamment en oeuvre les étapes du procédé de décodage décrit en relation avec les figures 6 et 7, selon les instructions du programme d'ordinateur PG0.

Selon un mode particulier de réalisation ne faisant pas partie de l'invention, le dispositif de décodage décrit précédemment est compris dans un terminal.

## Revendications

1. Procédé de décodage d'un signal de données codées représentatif d'une séquence vidéo multi-vues représentative d'une vidéo omnidirectionnelle, la séquence vidéo multi-vues comprenant au moins une première vue et une deuxième vue, le procédé de décodage comprend les étapes suivantes :

   - lecture (60) dans le signal de données, de paramètres permettant d'obtenir (61) une matrice homographique représentative de la transformation d'un plan de la deuxième vue vers un plan de la première vue,
   - décodage (62) d'une image de la deuxième vue, l'image de la deuxième vue comprenant une zone dite active comprenant des pixels qui lorsque lesdits pixels sont projetés via la matrice homographique sur une image de la première vue, sont compris dans l'image de la première vue, le décodage de l'image de la deuxième vue comprenant :

      - la génération (620) d'une image de référence comprenant des valeurs de pixels déterminées à partir de pixels précédemment reconstruits d'une image de la première vue et de la matrice homographique, et
      - pour au moins un bloc de l'image de la deuxième vue :

         - lecture (621) dans le signal de données, d'un index représentatif d'une image de référence comprise dans une liste d'images de référence comprenant au moins une image de la deuxième vue précédemment reconstruite,
         la liste d'images de référence comprenant l'image de référence générée, lorsqu'il a été déterminé (622) qu'au moins une partie dudit bloc appartient à la zone active, la liste d'images de référence ne comprenant pas l'image de référence générée, sinon,
- reconstruction (625) de ladite au moins une partie dudit bloc ou dudit bloc à partir de ladite image de référence indiquée par l'index lu.

2. Procédé de décodage selon la revendication 1, dans lequel lesdits paramètres sont des paramètres de caméra associés respectivement à une première caméra associée à la première vue et à une deuxième caméra associée à la deuxième vue, le procédé comprenant en outre le calcul de ladite matrice homographique à partir desdits paramètres de caméra.

3. Procédé de décodage selon la revendication 1, dans lequel lesdits paramètres sont les coefficients de la matrice homographique.

4. Procédé de décodage selon l'une quelconque des revendications 1 à 3, dans lequel lorsque la frontière de la zone active traverse le bloc à reconstruire, le procédé de décodage comprend en outre :

- la lecture, dans le signal de données, d'un autre index représentatif d'une image de référence comprise dans la liste d'images de référence, la liste d'images de référence ne comprenant pas l'image de référence générée, les pixels du bloc à reconstruire pour lesquels il a été déterminé qu'ils n'appartiennent pas à la zone active étant reconstruits à partir de pixels de l'image de référence indiquée par l'autre index lu.

5. Procédé de décodage selon l'une quelconque des revendications 1 à 4, comprenant en outre :

- la lecture dans le signal de données, de paramètres permettant d'obtenir une autre matrice homographique représentative de la transformation d'un plan de la deuxième vue vers un plan d'une troisième vue, au moins un pixel de l'image de la deuxième vue projeté dans une image de la troisième vue via l'autre matrice homographique étant compris dans l'image de la troisième vue,
- l'image de référence générée comprend en outre des valeurs de pixels déterminées à partir de pixels précédemment reconstruits de l'image de la troisième vue et de l'autre matrice homographique.

6. Procédé de codage dans un signal de données, d'une séquence vidéo multi-vues représentative d'une vidéo omnidirectionnelle, la séquence vidéo multi-vues comprenant au moins une première vue et une deuxième vue, le procédé de codage comprend les étapes suivantes:

- calcul (40) d'une matrice homographique représentative de la transformation d'un plan de la deuxième vue vers un plan de la première vue,
- codage (41), dans le signal de données, de paramètres permettant d'obtenir au décodage ladite matrice homographique,
- codage (42) d'une image de la deuxième vue, l'image de la deuxième vue comprenant une zone dite active comprenant des pixels qui lorsque lesdits pixels sont projetés via la matrice homographique sur une image de la première vue, sont compris dans l'image de la première vue, le codage de ladite image comprenant :

- la génération (420) d'une image de référence comprenant des valeurs de pixels déterminées à partir de pixels précédemment reconstruits d'une image de la première vue et de la matrice homographique, et
- pour au moins un bloc de l'image de la deuxième vue :

- prédiction (424) dudit bloc ou d'au moins une partie dudit bloc à partir d'une image de référence comprise dans une liste d'images de référence comprenant au moins une image de la deuxième vue précédemment reconstruite, la liste d'images de référence comprenant l'image de référence générée, lorsqu'il a été déterminé (421) que ladite au moins une partie dudit bloc appartient à la zone active, la liste d'images de référence ne comprenant pas l'image de référence générée, sinon,

- codage (424) dans le signal de données, d'un index représentatif de l'image de référence utilisée pour prédire ledit bloc ou ladite au moins une partie dudit bloc.

7. Procédé de codage selon la revendication 6, dans lequel lesdits paramètres sont des paramètres de caméra associés respectivement à une première caméra associée à la première vue et à une deuxième caméra associée à la deuxième vue.

**8.** Procédé de codage selon la revendication 6, dans lequel lesdits paramètres sont les paramètres de la matrice homographique.

**9.** Procédé de codage selon l'une quelconque des revendications 6 à 8, dans lequel lorsque la frontière de la zone active traverse le bloc à coder, le procédé de codage comprend en outre :

- le codage, dans le signal de données, d'un autre index représentatif d'une image de référence comprise dans la liste d'images de référence, la liste d'images de référence ne comprenant pas l'image de référence générée, les pixels du bloc à coder pour lesquels il a été déterminé qu'ils n'appartiennent pas à la zone active étant prédits à partir de pixels de l'image de référence indiquée par l'autre index.

**10.** Procédé de codage selon l'une quelconque des revendications 6 à 9, comprenant en outre :

- le calcul d'une autre matrice homographique représentative de la transformation d'un plan de la deuxième vue vers un plan d'une troisième vue, au moins un pixel de l'image de la deuxième vue projeté dans une image de la troisième vue via l'autre matrice homographique étant compris dans l'image de la troisième vue,
- le codage dans le signal de données, de paramètres permettant d'obtenir ladite autre matrice homographique,
- l'image de référence générée comprend en outre des valeurs de pixels déterminées à partir de pixels précédemment reconstruits de l'image de la troisième vue et de l'autre matrice homographique.

**11.** Dispositif de décodage d'un signal de données codées représentatif d'une séquence vidéo multi-vues représentative d'une vidéo omnidirectionnelle, la séquence vidéo multi-vues comprenant au moins une première vue et une deuxième vue, le dispositif de décodage comprend :

- des moyens de lecture dans le signal de données, de paramètres permettant d'obtenir une matrice homographique représentative de la transformation d'un plan de la deuxième vue vers un plan de la première vue,
- des moyens de décodage d'une image de la deuxième vue, l'image de la deuxième vue comprenant une zone dite active comprenant des pixels qui lorsque lesdits pixels sont projetés via la matrice homographique sur une image de la première vue, sont compris dans l'image de la première vue, lesdits moyens de décodage de l'image de la deuxième vue comprenant :

    - des moyens de génération d'une image de référence comprenant des valeurs de pixels déterminées à partir de pixels précédemment reconstruits d'une image de la première vue et de la matrice homographique, et
    - pour au moins un bloc de l'image de la deuxième vue :

        - des moyens de lecture dans le signal de données, d'un index représentatif d'une image de référence comprise dans une liste d'images de référence comprenant au moins une image de la deuxième vue précédemment reconstruite, la liste d'images de référence comprenant l'image de référence générée lorsqu'il a été déterminé qu'au moins une partie dudit bloc appartient à la zone active, la liste d'images de référence ne comprenant pas l'image de référence générée, sinon,
        - des moyens de reconstruction dudit bloc ou de ladite au moins une partie dudit bloc à partir de ladite image de référence indiquée par l'index lu.

**12.** Dispositif de codage dans un signal de données, d'une séquence vidéo multi-vues représentative d'une vidéo omnidirectionnelle, la séquence vidéo multi-vues comprenant au moins une première vue et une deuxième vue, le dispositif de codage comprend :

- des moyens de calcul d'une matrice homographique représentative de la transformation d'un plan de la deuxième vue vers un plan de la première vue,
- des moyens de codage, dans le signal de données, de paramètres permettant d'obtenir ladite matrice homographique,
- des moyens de codage d'une image de la deuxième vue, l'image de la deuxième vue comprenant une zone dite active comprenant des pixels qui lorsque lesdits pixels sont projetés via la matrice homographique sur une image de la première vue, sont compris dans l'image de la première vue, lesdits moyens de codage de ladite image comprenant :

    - des moyens de génération d'une image de référence comprenant des valeurs de pixels déterminées à

13

partir de pixels précédemment reconstruits d'une image de la première vue et de la matrice homographique, et

- pour au moins un bloc de l'image de la deuxième vue :

    - des moyens de prédiction dudit bloc ou d'au moins une partie dudit bloc à partir d'une image de référence comprise dans une liste d'images de référence comprenant au moins une image de la deuxième vue précédemment reconstruite, la liste d'images de référence comprenant l'image de référence générée lorsqu'il a été déterminé que ladite au moins une partie dudit bloc appartient à la zone active, la liste d'images de référence ne comprenant pas l'image de référence générée, sinon,
    - des moyens de codage dans le signal de données, d'un index représentatif de l'image de référence utilisée pour prédire ledit bloc ou ladite au moins une partie dudit bloc.

13. Programme d'ordinateur comportant des instructions pour la mise en oeuvre du procédé de décodage selon l'une quelconque des revendications 1 à 5 et/ou des instructions pour la mise en oeuvre du procédé de codage selon l'une quelconque des revendications 6 à 10, lorsque ledit programme est exécuté par un processeur.

**Patentansprüche**

1. Verfahren zur Decodierung eines Signals codierter Daten, das für eine Mehrfachansicht-Videosequenz repräsentativ ist, die für ein omnidirektionales Video repräsentativ ist, wobei die Mehrfachansicht-Videosequenz mindestens eine erste Ansicht und eine zweite Ansicht enthält, wobei das Decodierverfahren die folgenden Schritte enthält :

    - Lesen (60) von Parametern im Datensignal, die es ermöglichen, eine homographische Matrix zu erhalten (61), die für die Transformation einer Ebene der zweiten Ansicht zu einer Ebene der ersten Ansicht repräsentativ ist,
    - Decodieren (62) eines Bilds der der zweiten Ansicht, wobei das Bild der zweiten Ansicht eine so genannte aktive Zone enthält, die Pixel enthält, die, wenn die Pixel mittels der homographischen Matrix auf ein Bild der ersten Ansicht projiziert werden, im Bild der ersten Ansicht enthalten sind, wobei das Decodieren des Bilds der zweiten Ansicht enthält:

        - die Generierung (620) eines Bezugsbilds, das Werte von Pixeln enthält, die ausgehend von vorher rekonstruierten Pixeln eines Bilds der ersten Ansicht und von der homographischen Matrix bestimmt werden, und
        - für mindestens einen Block des Bilds der zweiten Ansicht :

            - Lesen (621) eines Index im Datensignal, der für ein Bezugsbild repräsentativ ist, das in einer Liste von Bezugsbildern enthalten ist, die mindestens ein vorher rekonstruiertes Bild der zweiten Ansicht enthält, wobei die Liste von Bezugsbildern das generierte Bezugsbild enthält, wenn bestimmt wurde (622), dass mindestens ein Teil des Blocks zur aktiven Zone gehört, wobei die Liste von Bezugsbildern das generierte Bezugsbild sonst nicht enthält,
            - Rekonstruktion (625) des mindestens einen Teils des Blocks oder des Blocks ausgehend von dem durch den gelesenen Index angezeigten Bezugsbild.

2. Decodierverfahren nach Anspruch 1, wobei die Parameter Kameraparameter sind, die einer der ersten Ansicht zugeordneten ersten Kamera bzw. einer der zweiten Ansicht zugeordneten zweiten Kamera zugeordnet sind, wobei das Verfahren außerdem die Berechnung der homographischen Matrix ausgehend von den Kameraparametern enthält.

3. Decodierverfahren nach Anspruch 1, wobei die Parameter die Koeffizienten der homographischen Matrix sind.

4. Decodierverfahren nach einem der Ansprüche 1 bis 3, wobei, wenn die Grenze der aktiven Zone den zu rekonstruierenden Block durchquert, das Decodierverfahren außerdem enthält:

    - das Lesen eines anderen Index im Datensignal, der für ein in der Liste von Bezugsbildern enthaltenes Bezugsbild repräsentativ ist, wobei die Liste von Bezugsbildern nicht das generierte Bezugsbild enthält, wobei die Pixel des zu rekonstruierenden Blocks, für die bestimmt wurde, dass sie nicht zur aktiven Zone gehören, ausgehend von Pixeln des Bezugsbilds rekonstruiert werden, das durch den anderen gelesenen Index angezeigt wird.

5. Decodierverfahren nach einem der Ansprüche 1 bis 4, das außerdem enthält:

- das Lesen von Parametern im Datensignal, die es ermöglichen, eine andere homographische Matrix zu erhalten, die für die Transformation einer Ebene der zweiten Ansicht zu einer Ebene einer dritten Ansicht repräsentativ ist, wobei mindestens ein Pixel des Bilds der zweiten Ansicht projiziert in ein Bild der dritten Ansicht mittels der anderen homographischen Matrix im Bild der dritten Ansicht enthalten ist,
- das generierte Bezugsbild enthält außerdem Werte von Pixeln, die ausgehend von vorher rekonstruierten Pixeln des Bilds der dritten Ansicht und von der anderen homographischen Matrix bestimmt werden.

6. Codierverfahren einer für ein omnidirektionales Video repräsentativen Mehrfachansicht-Videosequenz in einem Datensignal, wobei die Mehrfachansicht-Videosequenz mindestens eine erste Ansicht und eine zweite Ansicht enthält, wobei das Codierverfahren die folgenden Schritte enthält:

- Berechnung (40) einer homographischen Matrix, die für die Transformation einer Ebene der zweiten Ansicht zu einer Ebene der ersten Ansicht repräsentativ ist,
- Codierung (41) von Parametern im Datensignal, die es ermöglichen, bei der Decodierung die homographische Matrix zu erhalten,
- Codierung (42) eines Bilds der zweiten Ansicht, wobei das Bild der zweiten Ansicht eine so genannte aktive Zone enthält, die Pixel enthält, die, wenn die Pixel mittels der homographischen Matrix auf ein Bild der ersten Ansicht projiziert werden, im Bild der ersten Ansicht enthalten sind, wobei die Codierung des Bilds enthält:

- die Generierung (420) eines Bezugsbilds, das Werte von Pixeln enthält, die ausgehend von vorher rekonstruierten Pixeln eines Bilds der ersten Ansicht und von der homographischen Matrix bestimmt werden, und
- für mindestens einen Block des Bilds der zweiten Ansicht:

- Vorhersage (424) des Blocks oder zumindest eines Teils des Blocks ausgehend von einem Bezugsbild, das in einer Liste von Bezugsbildern enthalten ist, die mindestens ein vorher rekonstruiertes Bild der zweiten Ansicht enthält, wobei die Liste von Bezugsbildern das generierte Bezugsbild enthält, wenn bestimmt wurde (421), dass der mindestens eine Teil des Blocks zur aktiven Zone gehört, wobei die Liste von Bezugsbildern das generierte Bezugsbild sonst nicht enthält,
- Codierung (424) eines Index im Datensignal, der für das Bezugsbild repräsentativ ist, das verwendet wird, um den Block oder den mindestens einen Teil des Blocks vorherzusagen.

7. Codierverfahren nach Anspruch 6, wobei die Parameter Kameraparameter sind, die einer der ersten Ansicht zugeordneten ersten Kamera bzw. einer der zweiten Ansicht zugeordneten zweiten Kamera zugeordnet sind.

8. Codierverfahren nach Anspruch 6, wobei die Parameter die Parameter der homographischen Matrix sind.

9. Codierverfahren nach einem der Ansprüche 6 bis 8, wobei, wenn die Grenze der aktiven Zone den zu codierenden Block durchquert, das Codierverfahren außerdem enthält:

- die Codierung eines anderen Index im Datensignal, der für ein in der Liste von Bezugsbildern enthaltenes Bezugsbild repräsentativ ist, wobei die Liste von Bezugsbildern nicht das generierte Bezugsbild enthält, wobei die Pixel des zu codierenden Blocks, für die bestimmt wurde, dass sie nicht zur aktiven Zone gehören, ausgehend von Pixeln des Bezugsbilds vorhergesagt werden, das vom anderen Index angezeigt wird.

10. Codierverfahren nach einem der Ansprüche 6 bis 9, das außerdem enthält:

- die Berechnung einer anderen homographischen Matrix, die für die Transformation einer Ebene der zweiten Ansicht zu einer Ebene einer dritten Ansicht repräsentativ ist, wobei mindestens ein Pixel des Bilds der zweiten Ansicht projiziert in ein Bild der dritten Ansicht mittels der anderen homographische Matrix im Bild der dritten Ansicht enthalten ist,
- die Codierung von Parametern im Datensignal, die es ermöglichen, die andere homographische Matrix zu erhalten,
- das generierte Bezugsbild enthält außerdem Werte von Pixeln, die ausgehend von vorher rekonstruierten Pixeln des Bilds der dritten Ansicht und von der anderen homographischen Matrix bestimmt werden.

11. Decodiervorrichtung eines Signals codierter Daten, das für eine Mehrfachansicht-Videosequenz repräsentativ ist, die für ein omnidirektionales Video repräsentativ ist, wobei die Mehrfachansicht-Videosequenz mindestens eine erste Ansicht und eine zweite Ansicht enthält, wobei die Decodiervorrichtung enthält:

- Einrichtungen zum Lesen von Parametern im Datensignal, die es ermöglichen, eine homographische Matrix zu erhalten, die für die Transformation einer Ebene der zweiten Ansicht zu einer Ebene der ersten Ansicht repräsentativ ist,
- Decodiereinrichtungen eines Bilds der zweiten Ansicht, wobei das Bild der zweiten Ansicht eine sogenannte aktive Zone enthält, die Pixel enthält, die, wenn die Pixel mittels der homographischen Matrix auf ein Bild der ersten Ansicht projiziert werden, im Bild der ersten Ansicht enthalten sind, wobei die Decodiereinrichtungen des Bilds der zweiten Ansicht enthalten:

- Einrichtungen zur Generierung eines Bezugsbilds, das Werte von Pixeln enthält, die ausgehend von vorher rekonstruierten Pixeln eines Bilds der ersten Ansicht und von der homographischen Matrix bestimmt werden, und
- für mindestens einen Block des Bilds der zweiten Ansicht:

- Einrichtungen zum Lesen eines Index im Datensignal, der für ein Bezugsbild repräsentativ ist, das in einer Liste von Bezugsbildern enthalten ist, die mindestens ein vorher rekonstruiertes Bild der zweiten Ansicht enthält, wobei die Liste von Bezugsbildern das generierte Bezugsbild enthält, wenn bestimmt wurde, dass mindestens ein Teil des Blocks zur aktiven Zone gehört, wobei die Liste von Bezugsbildern das generierte Bezugsbild sonst nicht enthält,
- Einrichtungen zur Rekonstruktion des Blocks oder des mindestens einen Teils des Blocks ausgehend vom durch den gelesenen Index angezeigten Bezugsbild.

12. Vorrichtung zur Codierung einer Mehrfachansicht-Videosequenz in einem Datensignal, die für ein omnidirektionales Video repräsentativ ist, wobei die Mehrfachansicht-Videosequenz mindestens eine erste Ansicht und eine zweite Ansicht enthält, wobei die Codiervorrichtung enthält:

- Einrichtungen zur Berechnung einer homographischen Matrix, die für die Transformation einer Ebene der zweiten Ansicht zu einer Ebene der ersten Ansicht repräsentativ ist,
- Einrichtungen zur Codierung von Parametern im Datensignal, die es ermöglichen, die homographische Matrix zu erhalten,
- Einrichtungen zur Codierung eines Bilds der zweiten Ansicht, wobei das Bild der zweiten Ansicht eine so genannte aktive Zone enthält, die Pixel enthält, die, wenn die Pixel mittels der homographischen Matrix auf ein Bild der ersten Ansicht projiziert werden, im Bild der ersten Ansicht enthalten sind, wobei die Codiereinrichtungen des Bilds enthalten:

- Einrichtungen zur Generierung eines Bezugsbilds, das Werte von Pixeln enthält, die ausgehend von vorher rekonstruierten Pixeln eines Bilds der ersten Ansicht und von der homographischen Matrix bestimmt werden, und
- für mindestens einen Block des Bilds der zweiten Ansicht :

- Einrichtungen zur Vorhersage des Blocks oder mindestens eines Teils des Blocks ausgehend von einem Bezugsbild, das in einer Liste von Bezugsbildern enthalten ist, die mindestens ein vorher rekonstruiertes Bild der zweiten Ansicht enthält, wobei die Liste von Bezugsbildern das generierte Bezugsbild enthält, wenn bestimmt wurde, dass der mindestens eine Teil des Blocks zur aktiven Zone gehört, wobei die Liste von Bezugsbildern sonst nicht das generierte Bezugsbild enthält,
- Einrichtungen zur Codierung eines Index im Datensignal, der für das Bezugsbild repräsentativ ist, das verwendet wird, um den Block oder den mindestens eine Teil des Blocks vorherzusagen.

13. Computerprogramm, das Anweisungen zur Durchführung des Decodierverfahrens nach einem der Ansprüche 1 bis 5 und/oder Anweisungen zur Durchführung des Codierverfahrens nach einem der Ansprüche 6 bis 10 aufweist, wenn das Programm von einem Prozessor ausgeführt wird.

**Claims**

1. Method for decoding a coded data signal which is representative of a multi-view video sequence which is representative of an omnidirectional video, the multi-view video sequence comprising at least a first view and a second view, the decoding method comprising the following steps:

   - reading (60), from the data signal, parameters making it possible to obtain (61) a homographic matrix which is representative of the transformation from a plane of the second view to a plane of the first view,
   - decoding (62) an image of the second view, the image of the second view comprising a region referred to as an active region comprising pixels which, when said pixels are projected via the homographic matrix onto an image of the first view, are contained in the image of the first view, decoding the image of the second view comprising:

      - generating (620) a reference image comprising pixel values determined on the basis of previously reconstructed pixels of an image of the first view and of the homographic matrix, and
      - for at least one block of the image of the second view:

         - reading (621), from the data signal, an index which is representative of a reference image contained in a list of reference images comprising at least one image of the second view reconstructed previously, the list of reference images comprising the generated reference image, when it has been determined (622) that at least one portion of said block belongs to the active region, the list of reference images not comprising the generated reference image; otherwise,
         - reconstructing (625) said at least one portion of said block or said block on the basis of said reference image indicated by the read index.

2. Decoding method according to Claim 1, wherein said parameters are camera parameters associated with a first camera associated with the first view and with a second camera associated with the second view, respectively, the method further comprising computing said homographic matrix on the basis of said camera parameters.

3. Decoding method according to Claim 1, wherein said parameters are the coefficients of the homographic matrix.

4. Decoding method according to any one of Claims 1 to 3, wherein, when the boundary of the active region passes through the block to be reconstructed, the decoding method further comprises:

   - reading, from the data signal, another index which is representative of a reference image contained in the list of reference images, the list of reference images not comprising the generated reference image, the pixels of the block to be reconstructed for which it has been determined that they do not belong to the active region being reconstructed on the basis of pixels of the reference image which is indicated by the other read index.

5. Decoding method according to any one of Claims 1 to 4, further comprising:

   - reading, from the data signal, parameters making it possible to obtain another homographic matrix which is representative of the transformation from a plane of the second view to a plane of a third view, at least one pixel of the image of the second view projected into an image of the third view via the other homographic matrix being contained in the image of the third view,
   - the generated reference image further comprises pixel values determined on the basis of previously reconstructed pixels of the image of the third view and of the other homographic matrix.

6. Method for coding, in a data signal, a multi-view video sequence which is representative of an omnidirectional video, the multi-view video sequence comprising at least a first view and a second view, the coding method comprising the following steps:

   - computing (40) a homographic matrix which is representative of the transformation from a plane of the second view to a plane of the first view,
   - coding (41), in the data signal, parameters making it possible to obtain, when decoding, said homographic matrix,
   - coding (42) an image of the second view, the image of the second view comprising a region referred to as an active region comprising pixels which, when said pixels are projected via the homographic matrix onto an image of the first view, are contained in the image of the first view, coding said image comprising:

- generating (420) a reference image comprising pixel values determined on the basis of previously reconstructed pixels of an image of the first view and of the homographic matrix, and
- for at least one block of the image of the second view:

- predicting (424) said block or at least one portion of said block on the basis of a reference image contained in a list of reference images comprising at least one image of the second view reconstructed previously, the list of reference images comprising the generated reference image, when it has been determined (421) that said at least one portion of said block belongs to the active region, the list of reference images not comprising the generated reference image; otherwise,
- coding (424), in the data signal, an index which is representative of the reference image used to predict said block or said at least one portion of said block.

7. Coding method according to Claim 6, wherein said parameters are camera parameters associated with a first camera associated with the first view and with a second camera associated with the second view, respectively.

8. Coding method according to Claim 6, wherein said parameters are parameters of the homographic matrix.

9. Coding method according to any one of Claims 6 to 8, wherein, when the boundary of the active region passes through the block to be coded, the coding method further comprises:

- coding, in the data signal, another index which is representative of a reference image contained in the list of reference images, the list of reference images not comprising the generated reference image, the pixels of the block to be coded for which it has been determined that they do not belong to the active region being predicted on the basis of pixels of the reference image which is indicated by the other index.

10. Coding method according to any one of Claims 6 to 9, further comprising:

- computing another homographic matrix which is representative of the transformation from a plane of the second view to a plane of a third view, at least one pixel of the image of the second view projected into an image of the third view via the other homographic matrix being contained in the image of the third view,
- coding, in the data signal, parameters making it possible to obtain said other homographic matrix,
- the generated reference image further comprising pixel values determined on the basis of previously reconstructed pixels of the image of the third view and of the other homographic matrix.

11. Device for decoding a coded data signal which is representative of a multi-view video sequence which is representative of an omnidirectional video, the multi-view video sequence comprising at least a first view and a second view, the decoding device comprising:

- means for reading, from the data signal, parameters making it possible to obtain a homographic matrix which is representative of the transformation from a plane of the second view to a plane of the first view,
- means for decoding an image of the second view, the image of the second view comprising a region referred to as an active region comprising pixels which, when said pixels are projected via the homographic matrix onto an image of the first view, are contained in the image of the first view, said means for decoding the image of the second view comprising:

- means for generating a reference image comprising pixel values determined on the basis of previously reconstructed pixels of an image of the first view and of the homographic matrix, and
- for at least one block of the image of the second view:

- means for reading, from the data signal, an index which is representative of a reference image contained in a list of reference images comprising at least one image of the second view reconstructed previously, the list of reference images comprising the generated reference image when it has been determined that at least one portion of said block belongs to the active region, the list of reference images not comprising the generated reference image; otherwise,
- means for reconstructing said block or said at least one portion of said block on the basis of said reference image indicated by the read index.

**12.** Device for coding, in a data signal, a multi-view video sequence which is representative of an omnidirectional video, the multi-view video sequence comprising at least a first view and a second view, the coding device comprising:

- means for computing a homographic matrix which is representative of the transformation from a plane of the second view to a plane of the first view,
- means for coding, in the data signal, parameters making it possible to obtain said homographic matrix,
- means for coding, in an image of the second view, the image of the second view comprising a region referred to as an active region comprising pixels which, when said pixels are projected via the homographic matrix onto an image of the first view, are contained in the image of the first view, said means for coding said image comprising:

- means for generating a reference image comprising pixel values determined on the basis of previously reconstructed pixels of an image of the first view and of the homographic matrix, and
- for at least one block of the image of the second view:

- means for predicting said block or at least one portion of said block on the basis of a reference image contained in a list of reference images comprising at least one image of the second view reconstructed previously, the list of reference images comprising the generated reference image when it has been determined that said at least one portion of said block belongs to the active region, the list of reference images not comprising the generated reference image; otherwise,
- means for coding, in the data signal, an index which is representative of the reference image used to predict said block or said at least one portion of said block.

**13.** Computer program comprising instructions for implementing the decoding method according to any one of Claims 1 to 5 and/or instructions for implementing the coding method according to any one of Claims 6 to 10, when said program is executed by a processor.

Vue 1  Vue 2

FIG. 1

FIG. 2

FIG. 3

FIG. 4

Vue gauche

ZAg

Vue droite

ZAd

Image de référence générée
pour la vue courante

Vue courante

FIG. 5

FIG. 6

**FIG. 7**

**FIG. 8**

**FIG. 9**

| PAR | DAT   idx |
|-----|-----------|

**FIG. 10A**

| PAR | DAT   idx1, idx2 |
|-----|------------------|

**FIG. 10B**

FIG. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1793609 A